(19) Europäisches Patentamt
European Patent Office
Office européen des brevets

(11) **EP 4 327 774 A1**

(12) **EUROPÄISCHE PATENTANMELDUNG**

(43) Veröffentlichungstag:
**28.02.2024  Patentblatt 2024/09**

(21) Anmeldenummer: **23191434.2**

(22) Anmeldetag: **15.08.2023**

(51) Internationale Patentklassifikation (IPC):
**A61C 13/15** (2006.01)    **B29C 35/00** (2006.01)
**G02B 6/00** (2006.01)

(52) Gemeinsame Patentklassifikation (CPC):
**A61C 19/004;** G02B 6/0006; G02B 6/0008;
G02B 6/262

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **22.08.2022  DE 102022121128**

(71) Anmelder: **SCHOTT AG
55122 Mainz (DE)**

(72) Erfinder: **WOELFING, Bernd
55122 Mainz (DE)**

(74) Vertreter: **Schott Corporate IP
Hattenbergstraße 10
55122 Mainz (DE)**

(54) **VORRICHTUNG ZUR LICHTAPPLIKATION**

(57)    Die Erfindung betrifft eine Vorrichtung zur Lichtapplikation, insbesondere zur Lichthärtung flüssiger Materialien, umfassend ein Handstück und ein an dem Handstück befestigbares Lichtleitelement mit einem aus einem Festkörper bestehenden Lichtleitkörper, wobei das Lichtleitelement eine erste optische Achse für eingekoppeltes Licht und eine zweite optische Achse für ausgekoppeltes Licht definiert, wobei die zweite optische Achse quer zu der ersten optischen Achse verläuft, und wobei das Lichtleitelement eine distale Stirnseite aufweist an welcher das eingekoppelte Licht zur Auskopplung umlenkbar ist, derart, dass der Lichtaustritt durch einen Bereich der Mantelfläche des Lichtleitelements gebildet ist, und wobei die distale Stirnseite eine Mehrzahl von Stirnflächen zur Umlenkung des Lichts aufweist, welche jeweils quer zur ersten optischen Achse und quer zur zweiten optischen Achse verlaufen und welche über Zwischenflächen miteinander verbunden sind.

Fig. 1

**Beschreibung**

Die Erfindung betrifft eine Vorrichtung zur Lichtapplikation, insbesondere zur Lichthärtung flüssiger Materialien, umfassend ein Handstück und ein an dem Handstück befestigbares Lichtleitelement mit einem aus einem Festkörper bestehenden Lichtleitkörper.

Lichthärtbare Materialien finden unter anderem Anwendung im Bereich der Zahnmedizin, z.B. zur Versiegelung oder Füllung von Zähnen oder als Klebstoffe. Solche lichthärtbaren Materialien sind zunächst weich bzw. flüssig, damit sie am Zahn angebracht bzw. geformt werden können und härten aus durch Bestrahlung mit Licht bestimmter Wellenlänge.

Zur Bestrahlung des lichthärtbaren Materials kommen Geräte zur Lichtapplikation zum Einsatz. Aufgrund des begrenzten Platzes in der Mundhöhle und um eine Entkeimung bei einem Patientenwechsel zu ermöglichen weisen diese Geräte in der Regel ein Lichtleitelement auf, welches in die Mundhöhle und zum lichthärtbaren Material geführt wird und welches außerhalb der Mundhöhle mit einer Lichtquelle verbunden ist, welche z.B. in einem Handstück untergebracht sein kann.

Das in die Mundhöhle eingeführte Lichtleitelement ist typischerweise am vorderen Ende gebogen oder abgewinkelt ausgebildet, damit das Licht auch auf schwierig zugängliche Stellen gerichtet werden kann.

Entsprechende Vorrichtungen zur Lichtaushärtung und Lichtleitelemente sind etwa bekannt aus US 5,147,204, EP 2 339 382 A1, US 2008/0254405 A1, US 2006/0040231 A1, US 6,749,427 B1, FR 2 334 785 A1 oder DE 26 03 513 A1.

Der vorliegenden Erfindung liegt die Aufgabe zugrunde, eine Vorrichtung zur Lichtapplikation und ein Lichtleitelement bereitzustellen, welches auch an schwer zugänglichen Stellen in der Mundhöhle optimal eingesetzt werden kann und zugleich eine optimierte Effizienz ermöglicht. Weitere Aspekte der Aufgabe der Erfindung sind es, ein möglichst geringes Gewicht, eine möglichst gute Anpassung an die Form des Zahnes, sowie eine Reduktion der Härte beim ungewolltem Kontakt mit dem Zahn zu ermöglichen.

Diese Aufgabe wird durch die Gegenstände der unabhängigen Ansprüche gelöst. Vorteilhafte Ausführungsformen sind Gegenstände der abhängigen Ansprüche.

Erfindungsgemäß wird eine Vorrichtung zur Lichtapplikation, insbesondere zur Lichthärtung flüssiger Materialien, z.B. von Zahnfüllungen innerhalb der Mundhöhle, bereitgestellt. Die Vorrichtung umfasst ein Handstück und ein an dem Handstück, insbesondere lösbar, befestigbares Lichtleitelement.

Das Handstück umfasst ein Gehäuse und eine innerhalb des Gehäuses angeordneten Lichtquelle zur Emission von Licht.

Das Lichtleitelement umfasst einen aus einem Festkörper bestehenden Lichtleitkörper. Ferner umfasst das Lichtleitelement einen Lichteintritt zur Einkopplung von Licht in den Lichtleitkörper und einem Lichtaustritt zur Auskopplung von Licht aus dem Lichtleitkörper. Das Licht wird somit in einen transparenten Festkörper eingekoppelt, durch diesen transparenten Festkörper geleitet und wieder aus diesem transparenten Festkörper ausgekoppelt.

Das Lichtleitelement und/oder der Lichtleitkörper weist eine Längsausdehnung auf und definiert eine erste optische Achse für in den Lichtleitkörper eingekoppeltes Licht, wobei diese erste optische Achse entlang der besagten Längsausdehnung verläuft. Ferner definiert das Lichtleitelement und/oder der Lichtleitkörper eine zweite optische Achse für aus dem Lichtleitkörper ausgekoppeltes Licht, wobei die zweite optische Achse quer, d.h. nicht parallel, zu der ersten optischen Achse verläuft. Das Lichtleitelement ist demnach so ausgebildet, dass Licht schräg und/oder seitlich zu der ersten optischen Achse ausgekoppelt wird.

Das Lichtleitelement weist an einem distalen Ende seiner Längsausdehnung eine distale Stirnseite auf an welcher das in den Lichtleitkörper eingekoppelte Licht zur Auskopplung umlenkbar ist, derart, dass der Lichtaustritt durch einen Bereich der Mantelfläche des Lichtleitelements und/oder des Lichtleitkörpers gebildet ist. Die Mantelfläche des Lichtleitelements und/oder des Lichtleitkörpers entspricht insbesondere der Oberfläche, welche rings um die Längsachse verläuft, während das proximale und distale Ende insbesondere eine Stirnseite bilden.

Die distale Stirnseite weist eine Mehrzahl von Stirnflächen zur Umlenkung des Lichts auf, welche jeweils quer, d.h. nicht parallel, zur ersten optischen Achse und quer, d.h. nicht parallel, zur zweiten optischen Achse verlaufen und welche über Zwischenflächen miteinander verbunden sind.

Das Lichtleitelement und/oder der Lichtleitkörper haben insbesondere die Form eines Stabs mit einer entlang der Längsausdehnung verlaufenden Stabachse, welche insbesondere im Wesentlichen geradlinig verläuft. Mit anderen Worten ist das Lichtleitelement und/oder der Lichtleitkörper im Wesentlichen ungekrümmt ausgebildet.

Die optische Achse des ausgekoppelten Lichts (die zweite optische Achse) verläuft somit auch quer zu der Längsausdehnung und/oder der Stabachse des Lichtleitelements, insbesondere quer zur Längsausdehnung und/oder Stabachse im distalen Bereich bzw. am distalen Ende. Mit anderen Worten wird das Licht seitlich ausgekoppelt.

Das Lichtleitelement und/oder der Lichtleitkörper haben insbesondere an einem proximalen Ende der Längsausdehnung eine proximale Stirnfläche, wobei diese proximale Stirnfläche vorzugsweise den Lichteintritt bildet. Neben einer planen Ausbildung der proximalen Stirnfläche kann diese auch gekrümmt, bspw. konkav oder konvex zur Lichtquelle hin ausgebildet sein, um die Einkopplung des Lichtes an die Lichtquelle anzupassen bzw. zu optimieren.

Wie beschrieben ist das Lichtleitelement und/oder der Lichtleitkörper vorzugsweise gerade bzw. ungekrümmt. Demnach liegen die proximale und die distale Stirnseite einander insbesondere auf einer geraden Linie gegenüber.

Die distale Stirnseite weist wie beschrieben eine Mehrzahl von Stirnflächen zur Umlenkung bzw. Auskopplung des Lichts auf, welche über Zwischenflächen verbunden sind. Diese durch die Zwischenflächen miteinander verbundenen Stirnflächen sind bevorzugt in Richtung der Längsausdehnung und/oder der Stabachse des Lichtleitelements und/oder des Lichtleitkörpers versetzt angeordnet. Insbesondere sind die Stirnflächen entlang der Längsausdehnung dadurch aufgefächert und/oder erstrecken sich dadurch entlang der Längsausdehnung über einen größeren Bereich. Ferner sind diese durch die Zwischenflächen miteinander verbundenen Stirnflächen bevorzugt auch quer, insbesondere senkrecht, zur Längsausdehnung und/oder der Stabachse des Lichtleitelements versetzt angeordnet. Mit anderen Worten bilden die Stirn- und Zwischenflächen, insbesondere durch ihre abwechselnde Abfolge, eine stufenähnliche Anordnung aus.

Das Lichtleitelement kann beispielsweise zur Aushärtung von Zahnfüllungen vorgesehen sein. In diesem Fall können die üblichen Abmessungen von Zähnen zu berücksichtigen sein. Insbesondere in diesem Fall, aber auch unabhängig davon, kann die Abmessung des Lichtaustritts entlang der Längsausdehnung des Lichtleitelements in einem Bereich von 2mm bis 20mm liegen, vorzugsweise in einem Bereich von 5mm bis 15mm liegen, besonders bevorzugt in einem Bereich von 3mm bis 8mm liegen. Alternativ oder zusätzlich kann die Dicke des Lichtleitelements senkrecht zum Lichtaustritt, insbesondere am distalen Ende, in einem Bereich von 1mm bis 15mm liegen, vorzugsweise in einem Bereich von 2mm bis 10mm liegen, besonders bevorzugt in einem Bereich von 3mm bis 8mm liegen.

Insbesondere ist die Abmessung des Lichtaustritts entlang der Längsausdehnung des Lichtleitelements um einen Faktor von mindestens 1,5, vorzugsweise um einen Faktor von mindestens 2, besonders bevorzugt um einen Faktor von mindestens 3, größer als die Dicke des Lichtleitelements senkrecht zum Lichtaustritt.

Grundsätzlich kann es im Rahmen der Erfindung wünschenswert sein, die Dicke bzw. Höhe insbesondere am distalen Ende und/oder das Gewicht des Lichtleitelements möglichst gering zu halten. Trotzdem kann eine gegebenenfalls auch zusätzliche Abschlusskante und/oder Abschlussfläche vorgesehen sein, welche die Dicke bzw. Höhe insbesondere am distalen Ende und/oder das Gewicht des Lichtleitelements erhöht. Mit anderen Worten das distale Ende ist stumpf ausgebildet bzw. weist einen stumpfen Abschluss auf.

Insbesondere kann die distale Stirnseite am äußersten Ende eine solche Abschlussfläche aufweisen. Die Abschlussfläche kann vorzugweise einen stumpfen Abschluss des Lichtleitelements am äußersten Ende der distalen Stirnseite bilden. Die Abschlussfläche kann beispielsweise flach oder gerundet ausgebildet ist und derart verlaufen, dass am äußersten Ende der distalen Stirnseite spitze Winkel vermieden werden, insbesondere Winkel unter 75 Grad vermieden werden. Die Abschlussfläche kann vorzugsweise derart verlaufen, dass ein Normalenvektor auf der Abschlussfläche mit der ersten optischen Achse einen größeren Winkel bildet als ein Winkel zwischen dem Normalenvektor einer Stirnfläche und der ersten optischen Achse.

Eine Abschlussfläche kann vorzugweise einen Dickenanteil der Dicke des Lichtleitelements aufweisen, welcher im Bereich von 3% bis 30% liegt. Obwohl dies einer Reduktion von Dicke bzw. der Höhe insbesondere am distalen Ende und/oder das Gewicht des Lichtleitelements eigentlich entgegensteht und obwohl hierdurch ggf. ein Intensitätsverlust des austretenden Lichts entsteht, kann hierdurch in vorteilhafter Weise, insbesondere im Bereich medizinischer Anwendungen, eine Verletzungsgefahr vermieden bzw. vermindert werden. Darüber hinaus kann durch die zusätzliche Dicke einen homogenisierende Wirkung auf das austretende Licht erzielt werden.

Die Abschlussfläche wird insbesondere durch das Material des Lichtleitkörpers bzw. des Lichtleitelements gebildet. Mit anderen Worten ist die Abschlussfläche bzw. die damit zusammenhängende zusätzliche bzw. erhöhte Dicke bzw. Höhe insbesondere am distalen Ende des Lichtleitelements monolithisch mit dem Lichtleitkörper bzw. dem Lichtleitelement ausgebildet.

Die oder einige der Stirnflächen der Stirnseite sind vorzugsweise planar ausgebildet. Ferner weisen die oder einige der Stirnflächen vorzugsweise dieselbe Orientierung auf.

Die oder einige der Zwischenflächen sind vorzugsweise planar ausgebildet. Ferner weisen die oder einige der Zwischenflächen vorzugsweise dieselbe Orientierung auf.

Die Stirnflächen der distalen Stirnseite verlaufen vorzugsweise derart, dass ein Normalenvektor mit der ersten und/oder zweiten optischen Achse einen Winkel bildet, welcher zwischen 157,5 und 112,5 Grad, vorzugsweise zwischen 145 und 125 Grad liegt, besonders bevorzugt zwischen 140 und 130 Grad liegt, nochmals bevorzugter zwischen 137,5 und 132,5 Grad liegt.

Die zweite optische Achse verläuft vorzugsweise zu der ersten optischen Achse in einem Winkel, welcher zwischen 45 und 135 Grad liegt, vorzugsweise zwischen 70 und 110 Grad liegt, besonders bevorzugt zwischen 80 und 100 Grad liegt, nochmals bevorzugter zwischen 85 und 95 Grad liegt.

Die Zwischenflächen der distalen Stirnseite verlaufen vorzugsweise derart, dass ein Normalenvektor mit der ersten optischen Achse einen kleineren Winkel bildet als ein Winkel zwischen dem Normalenvektor einer Stirnfläche und der ersten optischen Achse.

Die Zwischenflächen der distalen Stirnseite verlaufen vorzugsweise derart, dass ein Normalenvektor mit der ersten optischen Achse einen Winkel bildet, welcher zwischen 70 und 110 Grad liegt, besonders bevorzugt zwischen 80 und 100 Grad liegt, nochmals bevorzugter zwischen 85 und 95 Grad liegt.

In einer bevorzugten Ausführungsform ist vorgesehen, dass die distale Stirnseite eine Anzahl von Stirnflächen aufweist, welche im Bereich von 5 bis 20 liegt, vorzugsweise im Bereich von 6 bis 15 liegt, besonders bevorzugt im Bereich von 7 bis 11 liegt.

In einer bevorzugten Ausführungsform ist vorgesehen, dass die distale Stirnseite eine Anzahl von Stirnflächen pro Millimeter entlang der Längsausdehnung aufweist, welche im Bereich von 0,5 bis 2 liegt, vorzugsweise im Bereich von 0,6 bis 1,5 liegt, besonders bevorzugt im Bereich von 0,7 bis 1,1 liegt.

Die vorgenannten Anzahlen an Stirnflächen bzw. Anzahlen an Stirnflächen pro Längsausdehnung sind besonders vorteilhaft für eine optimale Effizienz wie weiter unten näher beschrieben wird.

Vorzugsweise umfasst das Lichtleitelement einen insbesondere auf der distalen Stirnseite und/oder deren Stirnflächen aufgebrachten Reflektor zur Auskopplung von Licht aus dem Lichtleitkörper. Der Reflektor ist vorzugsweise als Spiegel oder Interferenzspiegel mit einer oder mehreren Schichten ausgebildet, welche bevorzugt aufgedampft und/oder aufgesputtert ist. Der Reflektor kann insbesondere unmittelbar auf dem Lichtleitkörper aufgebracht sein, d.h. ohne eine weitere darunter befindliche Schicht.

Der Reflektor kann z.B. für Licht mit einer Wellenlänge zwischen 380 und 500 Nanometer eine Reflektivität von über 90 Prozent, vorzugsweise von über 95 Prozent, besonders bevorzugt von über 99 Prozent aufweisen.

Das Material des Lichtleitkörpers ist vorzugsweise homogen und/oder isotrop. Insbesondere ist der Lichtleitkörper somit vorzugsweise nicht als Faserbündel ausgebildet, also vorzugsweise kein faserbasierter Lichtleiter. Mit anderen Worten sind insbesondere keine faseroptischen Elemente vorgesehen, sondern wie beschrieben insbesondere Glas- oder Kunststoff-Formteile, die beschichtet sein können und zumindest ein Reflektorelement aufweisen können.

Der Lichtleitkörper ist vorzugsweise monolithisch bzw. einstückig ausgebildet. Mit anderen Worten besteht der Lichtleitkörper vorzugsweise nicht aus einer Mehrzahl oder Vielzahl miteinander verbundener Bestandteile, also insbesondere nicht aus miteinander verbundenen einzelnen Glasfasern. Der Lichtleitkörper kann somit den insbesondere einzigen lichtleitenden Kern des Lichtleitelements bilden.

In einer Ausführungsform besteht der Lichtleiterkörper aus Glas, ist insbesondere als Glaspressteil hergestellt, wobei bevorzugt Borosilikatglas und/oder optisches Kronglas umfasst ist. Borosilikatglas hat hierbei insbesondere die Vorteile einer hohen chemischen Resistenz und einer guten Autoklavierbeständigkeit.

In einer anderen Ausführungsform ist der Lichtleiterkörper aus Kunststoff, insbesondere als Kunststoffspritzgussteil hergestellt ist, wobei bevorzugt Polycarbonat (PC), Polymethylmethaacrylat (PMMA) und/oder Cycloolefin-Copolymere (COC) umfasst ist. Lichtleitkörper mit PMMA kommen aufgrund der vergleichsweise niedrigen Temperaturbeständigkeit insbesondere für Single-Use-Zwecke in Betracht und werden z.B. nur EtOx-sterilisiert.

Der Lichtleitkörper, insbesondere die distale Stirnseite, insbesondere deren Stirnflächen und Zwischenflächen, können mittels Laserschneiden hergestellt sein, bevorzugt mittels Laserscheiden aus Glas geschnitten sein und besonders bevorzugt danach poliert sein. Dabei kann das Polieren sowohl abrasiv als auch chemisch oder physikalisch mittels eines entsprechenden Ätzprozesses erfolgen.

Das Lichtleitelement umfasst einen den Lichtleitkörper und/oder den Reflektor teilweise oder vollständig umschließenden Mantel, wobei der Mantel einen Brechungsindex aufweist, welcher geringer ist als ein Brechungsindex des Lichtleitkörpers und wobei der Mantel vorzugsweise als $SiO_2$-Sputterschicht, als Kunststoffschicht oder als Flüssig-Silikon-Beschichtung (Liquid Silicone Rubber) ausgebildet ist. Wie beschrieben ist der Lichtleitkörper vorzugsweise homogen, isotrop und/oder monolithisch ausgebildet. Insbesondere kann demnach der Lichtleitkörper einen im Wesentlichen homogenen und/oder isotropen Brechungsindex aufweisen. Auch der ggf. auf dem Lichtleitkörper aufgebrachte Mantel kann vorzugsweise einen homogenen und/oder isotropen Brechungsindex aufweisen. Mit anderen Worten kann vorgesehen sein, dass der Lichtleitkörper nur einen Brechungsindex aufweist und/oder dass ein ggf. vorhandener Mantel nur einen Brechungsindex aufweist.

Die Differenz zwischen dem Brechungsindex des Lichtleitkörpers und dem Brechungsindex des Mantels ist vorzugsweise kleiner gleich 0,16, vorzugsweise kleiner gleich 0,08.

Die Dicke des Mantels ist vorzugsweise kleiner gleich 100 $\mu$m, vorzugsweise kleiner gleich 10 $\mu$m, vorzugsweise kleiner gleich 5 $\mu$m.

Das Gehäuse des Handstücks kann eine Befestigungseinrichtung umfassen und das Lichtleitelement einen Befestigungsbereich zur Befestigung des Lichtleitelements an dem Gehäuse des Handstücks, derart, dass von der Lichtquelle emittiertes Licht durch den Lichteintritt in den Lichtleitkörper eingekoppelt wird und außerhalb des Gehäuses des Handstücks durch den Lichtaustritt aus dem Lichtleitkörper ausgekoppelt wird.

Die Längsausdehnung des Lichtleitelements und/oder des Lichtleitkörpers liegt vorzugsweise zwischen 1 und 30 Zentimetern, bevorzugt zwischen 5 und 15 Zentimetern, besonders bevorzugt zwischen 8 und 12 Zentimetern.

Das Lichtleitelement und/oder der Lichtleitkörper weisen entlang der Längsausdehnung vorzugsweise einen Querschnitt auf, dessen Fläche zwischen 0,1 und 3 Quadratzentimetern liegt, bevorzugt zwischen 0,3 und 2 Quadratzentimetern liegt, besonders bevorzugt zwischen 0,5 und 1,5 Quadratzentimetern liegt.

Das Lichtleitelement kann entlang der Längsausdehnung, insbesondere entlang der Stabachse einen veränderlichen Querschnitt aufweisen, wobei der Querschnitt des Lichtleitelements am proximalen Ende beispielsweise eckig, insbesondere rechteckig oder quadratisch, oder auch rund, insbesondere kreisförmig ausgebildet ist und am distalen Ende beispielsweise eckig, insbesondere rechteckig ausgebildet ist und wobei zwischen dem proximalen und dem distalen Ende ein Formübergangsbereich vorgesehen ist.

Der Querschnitt des Lichtleitelements kann insbesondere am proximalen Ende konisch ausgebildet sein, z.B. um die Einkopplung von divergentem Licht zu begünstigen.

Es kann vorgesehen sein, dass innerhalb des Gehäuses des Handstücks eine Spannungsquelle zur Bereitstellung einer elektrischen Spannung zum Betrieb der Lichtquelle angeordnet ist. Die Spannungsquelle ist vorzugsweise als wiederaufladbarer Energiespeicher ausgebildet. Ferner kann die Vorrichtung zur Lichtapplikation vorzugsweise eine Ladestation umfassen, die dazu ausgebildet ist, den wiederaufladbaren Energiespeicher aufzuladen.

Die Erfindung betrifft ferner ein Lichtleitelement, insbesondere für eine Vorrichtung zur Lichtapplikation wie vorstehend beschrieben.

Das Lichtleitelement weist eine Längsausdehnung auf und definiert eine erste optische Achse für in den Lichtleitkörper eingekoppeltes Licht, wobei diese erste optische Achse entlang der Längsausdehnung des Lichtleitelements verläuft. Der Lichtaustritt definiert eine zweite optische Achse für aus dem Lichtleitkörper ausgekoppeltes Licht, wobei die zweite optische Achse quer zu der ersten optischen Achse verläuft.

Das Lichtleitelement weist an einem distalen Ende seiner Längsausdehnung eine distale Stirnseite auf an welcher das in den Lichtleitkörper eingekoppelte Licht zur Auskopplung umlenkbar ist, derart, dass der Lichtaustritt durch einen Bereich der Mantelfläche des Lichtleitelements gebildet ist.

Die distale Stirnseite weist eine Mehrzahl von Stirnflächen zur Umlenkung des Lichts auf, welche jeweils quer zur ersten optischen Achse und quer zur zweiten optischen Achse verlaufen und welche über Zwischenflächen miteinander verbunden sind.

Das Lichtleitelement kann ferner eines oder mehrere Merkmale aufweisen, welche vorstehend im Zusammenhang mit der Vorrichtung zur Lichtapplikation genannt wurden.

Die Erfindung betrifft ferner die Verwendung eines Lichtleitelements zur Aushärtung flüssiger Materialien, insbesondere zur industriellen Kleberaushärtung.

Die erfindungsgemäße Vorrichtung zur Lichtapplikation und/oder das erfindungsgemäße Lichtleitelement sind auch für weitere medizinische Untersuchungen, Therapien bzw. Behandlungen bei bspw. verschiedenen Haut-, Schleimhaut- oder Krebserkrankungen bzw. als Komponente in oder an ebensolchen Untersuchungs-, Therapievorrichtungen bzw. - geräten geeignet. Dies können zum Beispiel Photodynamische Therapie (PDT) oder Photo-Immuno-Therapie (PIT) oder generell solche Untersuchungen, Therapien bzw. Behandlungen sein, bei denen in begrenztem Raum eine gezielte bzw. gerichtete und homogene Ausleuchtung oder Applikation von Licht erwünscht, gefordert bzw. notwendig ist.

Die Photodynamische Therapie (PDT) ist eine minimalinvasive Therapiemöglichkeit, die neben anderen Therapieoptionen eingesetzt werden kann. Unter der PDT versteht man ein Verfahren zur Behandlung von Tumoren und anderen Gewebeveränderungen (wie beispielsweise Gefäßneubildungen) mit Licht in Kombination mit einer lichtaktivierbaren Substanz. Zu Beginn der Behandlung werden den Patienten intravenös lichtsensible Substanzen, sogenannte Photosensitizer in die Blutbahn injiziert, die sich in beziehungsweise an den Krebszellen anreichern. Diese natürlichen Photosubstanzen konzentrieren sich in den Tumorzellen und bewirken dort eine starke Lichtempfindlichkeit. Dazu werden während der PDT-Behandlung in das Tumor-Gewebe mehrere Kanülen (typ. bis zu 8) gestochen, in die jeweils ein Lichtleitelement eingeführt wird. Bei PDT-Behandlungen wird meist LaserLicht, in der Regel mit Wellenlängen im sichtbaren Spektralbereich, zum Beispiel Grün-Licht mit 532nm oder Rot-Licht mit 690nm Wellenlänge, in die Vorrichtung zur Lichtapplikation und/oder das Lichtleitelement eingekoppelt und an dessen Lichtaustritt ausgekoppelt, so dass das bspw. Tumor-Gewebe möglichst gleichmäßig ausgeleuchtet wird. Dabei bilden sich in diesen Tumorzellen aggressive Sauerstoffradikale, welche die Tumorzellen selektiv zerstören. Im Gegensatz zu den kranken Zellen bleiben die gesunden Zellen von dieser chemischen Reaktion unberührt. Der genaue Wirkmechanismus ist u.a. in "Photodynamic Therapy of Cancer", Cancer Medicine, 2003 beschrieben.

Ein ähnliches Verfahren stellt die Photo-Immuno-Therapie (PIT) dar, bei der in Anwesenheit eines photoaktivierbaren Medikaments eine Immunreaktion ausgelöst wird und die Krebszellen dadurch absterben.

Schließlich betrifft die Erfindung noch ein Verfahren zur Herstellung eines Lichtleitelements umfassend das Bereitstellen eines Grundkörpers mit einer Längsausdehnung, insbesondere aus Glas, z.B. als Glaspressteil, oder aus Kunststoff, z.B. als Kunststoffspritzgussteil, und Bearbeiten des distalen Endes des Grundkörpers derart, dass eine distale Stirnseite mit einer Mehrzahl von Stirnflächen gebildet wird, welche über Zwischenflächen miteinander verbunden sind.

Das Bearbeiten des distalen Endes kann beispielsweise mittels eines Laserprozesses, z.B. Laserschneiden, insbesondere mittels eines Linienfokus, erfolgen. Denkbar ist auch die distale Stirnseite und/oder die Stirn- und Zwischenflächen mittels eines Umformungs- bzw.

Verformungsprozesses, bspw. eines Preßprozesses herzustellen bzw. an einen Grundkörper aus Glas oder Kunststoff anzuformen. Vorteilhaft kann dies insbesondere bei einer kleinen Anzahl von Stufen, gebildet durch die Stirn- und Zwischenflächen bzw. wenn die Stufen auf eine große Stirnseite angeordnet sind, bspw. 5 Stufen pro 10 mm, und/oder falls eine Verundung von Ecken und Kanten an den Stirn- und Zwischenflächen akzeptabel ist. Werden dagegen eine größere Anzahl von Stufen auf kleinerer Fläche angeordnet, bspw. 15 oder mehr Stufen pro 10 mm, bieten Laserprozesse, insb. o.g. Laserschneiden mit Linienfokus, vorteilhaft die Option scharfe Ecken und Kanten darzustellen. Derartige Laserprozesse können mit kontinuierlicher, aber auch gepulster, insb. auch ultrakurzgepulst, Laserstrahlung durchgeführt werden. Ebenso können typische Prozesse aus der Mikrostrukturierungstechnologie wie Ätzprozesse, nass sowie trockenchemisch, zum Einsatz kommen. Die hierzu meist notwendigen vorbereitenden Prozesse, bspw. Beschichtung, Lithografie und ähnliches sind allerdings oft aufwendig, sowohl zeitlich, als auch apparativ und ggf. damit erst bei entsprechenden Kosten/Nutzen Aufwand attraktiv. Ähnlich wie Bei den Mikrostrukturierungstechnologien ist insb. der Kosten/Nutzen Aufwand auch bei grundsätzlich möglichen abrasiven Verfahren, wie Schleifen, Läppen und Polieren, ggf. auch CNC-gestützt, oder bspw. Ultraschallschwingläppen (USSL) zunächst zu betrachten.

Mittels der Laserverfahren mit Linienfokus wird dazu insbesondere am distalen Ende des Grundkörpers entlang einer schräg zu der Längsausdehnung des Grundkörpers verlaufenden ersten Richtung eine erste Schnittfläche gebildet, um eine distale Stirnfläche zu bilden und danach entlang einer paralleler zu der Längsausdehnung des Grundkörpers als die erste Richtung verlaufenden zweiten Richtung, eine zweite Schnittfläche gebildet, um eine Zwischenfläche zu bilden und danach vorzugsweise entlang der ersten Richtung eine dritte Schnittfläche gebildet wird, um eine weitere distale Stirnfläche zu bilden.

Ausführungsbeispiele der Erfindung werden nachfolgend näher anhand der Figuren erläutert. Dabei zeigen:

Fig. 1:     eine seitliche Schnittansicht einer Vorrichtung zur Lichtapplikation mit einem Lichtleitelement,

Fig. 2:     eine seitliche Schnittansicht des distalen Endes des Lichtleitelements aus Fig. 1,

Fig. 3:     eine seitliche Schnittansicht einer simulativen Versuchsanordnung mit einem Lichtleitelement und Strahlengängen von in das Lichtleitelement eingekoppeltem und aus dem Lichtleitelement ausgekoppeltem Licht und zwei Detektoren (im Abstand 1 mm und 10 mm) zur Bestimmung der örtlichen Bestrahlungsstärke des ausgekoppelten Lichts,

Fig. 4:     ein vergrößerter Ausschnitt aus Fig. 3,

Fig. 5:     eine seitliche Schnittansicht orthogonal zu der Darstellung in Fig. 3,

Fig. 6-7:   örtliche Bestrahlungsstärken im Abstand 1 mm und 10 mm von dem Lichtleitelement gemäß den beiden Detektoren in Fig. 3,

Fig. 8-9:   Abbildung von Bestrahlungsstärken (nach Glättung unter Berücksichtigung der Lichtstreuung) im Abstand 0 mm und 10 mm von dem Lichtleitelement gemäß den beiden Detektoren in Fig. 3,

Fig. 10-11: Diagramme der Effizienz h = (I_min * A / E) aufgetragen gegenüber der Anzahl der Stirnflächen für verschiedene Arbeitsabstände bei quadratischer Aushärtefläche (Fig. 11) bzw. in einem Kreisdurchmesser (Fig. 12).

Fig. 12:    eine seitliche Schnittansicht des distalen Endes eines Lichtleitelements mit einer stumpfen Abschlussfläche.

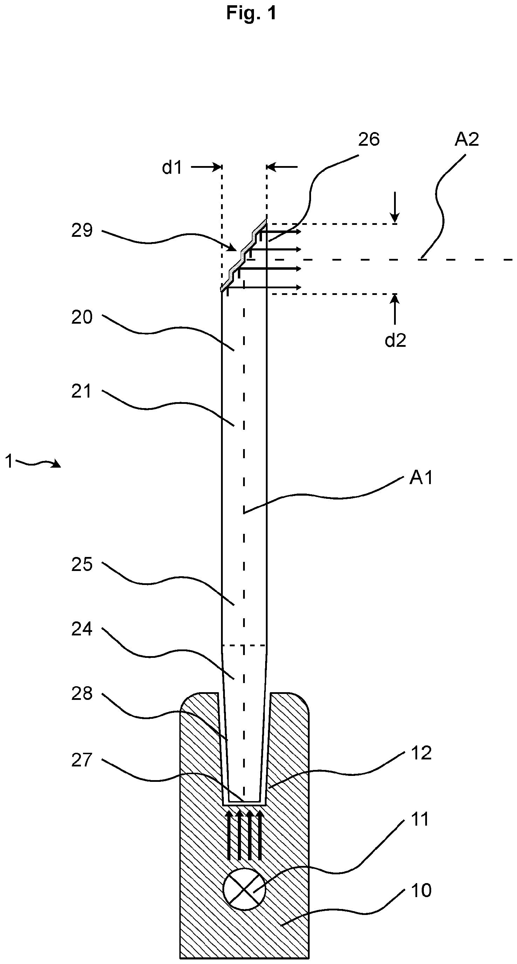

Fig. 1 zeigt eine Vorrichtung zur Lichtapplikation 1 mit einem Handstück 10 in welchem eine Lichtquelle 11 angeordnet ist sowie einem Lichtleitelement 20 welches einen transparenten Lichtleitkörper 21 umfasst bzw. als solcher ausgebildet ist. Das Handstück 10 umfasst eine Befestigungseinrichtung 12 für das Lichtleitelement 20 und das Lichtleitelement 20 einen korrespondierenden Befestigungsbereich 28 zur Befestigung an dem Handstück 10.

Von der in dem Handstück angeordneten Lichtquelle 11 emittiertes Licht kann durch einen Lichteintritt 27 am proximalen Ende des Lichtleitelements 20 bzw. des Lichtleitkörpers 21 in das Material des Lichtleitkörpers 21 eingekoppelt werden und dann am distalen Ende durch Umlenkung an der distalen Stirnseite 29 seitlich durch einen von der Mantelfläche des Lichtleitelements 20 bzw. des Lichtleitkörpers 21 gebildeten Lichtaustritt 26 ausgekoppelt werden.

In dem gezeigten Beispiel weist das Lichtleitelement 20 bzw. der Lichtleitkörper 21 zudem einen Konusabschnitt 24 auf, um die Einkopplung von insbesondere divergentem Licht zu begünstigen. Insbesondere Licht von LEDs, welches mitunter unter relativ großem Winkel abgegeben wird, kann hierdurch noch in den Lichtleitkörper eingekoppelt werden.

Das Lichtleitelement 20 ist länglich ausgebildet und weist demnach eine Längsausdehnung auf und definiert eine dazu parallele erste optische Achse A1 für in den Lichtleitköper eingekoppeltes Licht. Der durch die Mantelfläche gebildete Lichtaustritt 26 definiert eine zweite optische Achse A2 für aus dem Lichtleitkörper 21 ausgekoppeltes Licht.

Die zweite optische Achse A2 verläuft dadurch quer, in diesem Fall senkrecht, zu der ersten optischen Achse A1, ohne dass das Lichtelement 20 am distalen Ende eine Krümmung aufweist.

Mit einem im Wesentlichen geraden Lichtleitelement 20, das ausgebildet ist, Licht seitlich auszukoppeln, gelingt es, ein flach aufbauendes Lichtleitelement bereitzustellen. Mit einer solchen flachen Bauweise ist nur ein geringer Platzbedarf verbunden, so dass beispielsweise die Aushärtung von Zahnfüllungen insbesondere bei Backenzähnen (Molaris) ermöglicht wird.

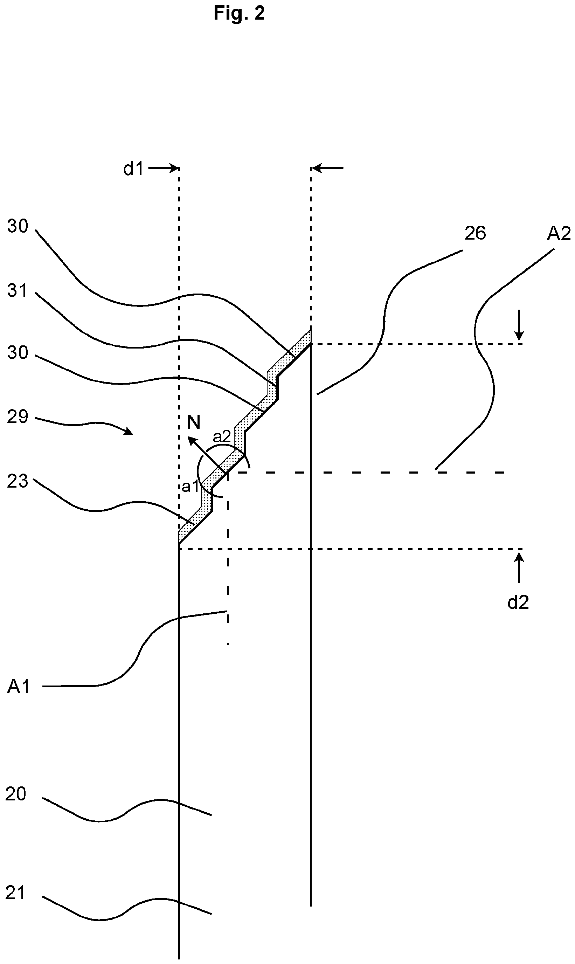

Fig. 2 zeigt eine vergrößerte Darstellung des distalen Endes des Lichtleitelements 20.

Zu erkennen ist, dass die distale Stirnseite 29, welche am distalen Ende der geradlinig verlaufenden optischen Achse A1 liegt, eine Mehrzahl von Stirnflächen 30 zur Umlenkung des eingekoppelten Lichts aufweist. Die Stirnflächen 30 verlaufen jeweils quer zur ersten optischen Achse A1 und quer zur zweiten optischen Achse A2 und sind demnach dazu geeignet, die Richtung des eingekoppelten Lichts zur Seite umzulenken.

In dem gezeigten Beispiel verlaufen die Stirnflächen 30 der distalen Stirnseite 29 derart, dass ein die Stirnflächen definierender Normalenvektor N sowohl mit der ersten optischen Achse A1 als auch mit der zweiten optischen Achse A2 jeweils einen Winkel a1 bzw. a2 bildet, welcher zwischen 125 und 145 Grad liegt, insbesondere 135 Grad beträgt.

Die Stirnflächen 30 verlaufen demnach so, dass der die Stirnflächen 30 definierende Normalenvektor N zu der Längsausdehnung des Lichtleitelements 20, insbesondere zu der Längsachse bzw. Stabachse des Lichtleitelements 20, einen Winkel a1 aufweist, welcher zwischen 125 und 145 Grad liegt, insbesondere 135 Grad beträgt.

Die in Mehrzahl vorhandenen Stirnflächen 30 sind zudem über Zwischenflächen 31 miteinander verbunden. Die Zwischenflächen 31 unterscheiden sich von den Stirnflächen 30 insbesondere dadurch, dass sie eine andere Orientierung aufweisen. Insbesondere verlaufen die Zwischenflächen 31 derart, dass ein die Zwischenfläche definierender Normalenvektor mit der ersten optischen Achse A1 und/oder mit der Längsachse bzw. Stabachse des Lichtleitelements 20 einen kleineren Winkel bildet als der zuvor genannte Winkel a1. Insbesondere verlaufen die Zwischenflächen sogar parallel zu der ersten optischen Achse A1 und/oder der Längsachse bzw. Stabachse des Lichtleitelements 20, so dass der Winkel zwischen einem die Zwischenfläche definierenden Normalenvektor zu der ersten optischen Achse A1 und/oder der Längsachse bzw. Stabachse 90 Grad beträgt.

Die durch die Zwischenflächen 31 miteinander verbundenen Stirnflächen 30 sind entlang der Längsausdehnung des Lichtleitelements 20, insbesondere entlang der ersten optischen Achse A1, versetzt bzw. gestaffelt angeordnet.

Hierdurch wird es ermöglicht, dass die Abmessung d2 des Lichtaustritts 26 entlang der Längsausdehnung des Lichtleitelements 20 größer ist als die Dicke d1 des Lichtleitelements 20 senkrecht zum Lichtaustritt 26. Mit anderen Worten kann somit ein besonders flach aufbauendes Lichtleitelement 20 verwirklicht werden, welches zudem ein geringes Gewicht ermöglicht.

Das Lichtleitelement 20 weist in der Darstellung neben dem Lichtleitkörper 21 noch einen Reflektor 23 auf, welcher auf der distalen Stirnseite 29 derart aufgebracht ist, dass er sowohl die Stirnflächen 30 als auch die Zwischenflächen 31 bedeckt. Ein solcher Reflektor kann eine oder mehrere Schichten umfassen, welche auf die Oberfläche des Lichtleitkörper 21 z.B. aufgedampft und/oder aufgesputtert sein können.

Ferner kann das Lichtleitelement 20 in einer Weiterbildung auch noch eine umschließende Mantelschicht (nicht dargestellt) aufweisen, welche den Lichtleitkörper 21 samt Reflektor 23 umschließt.

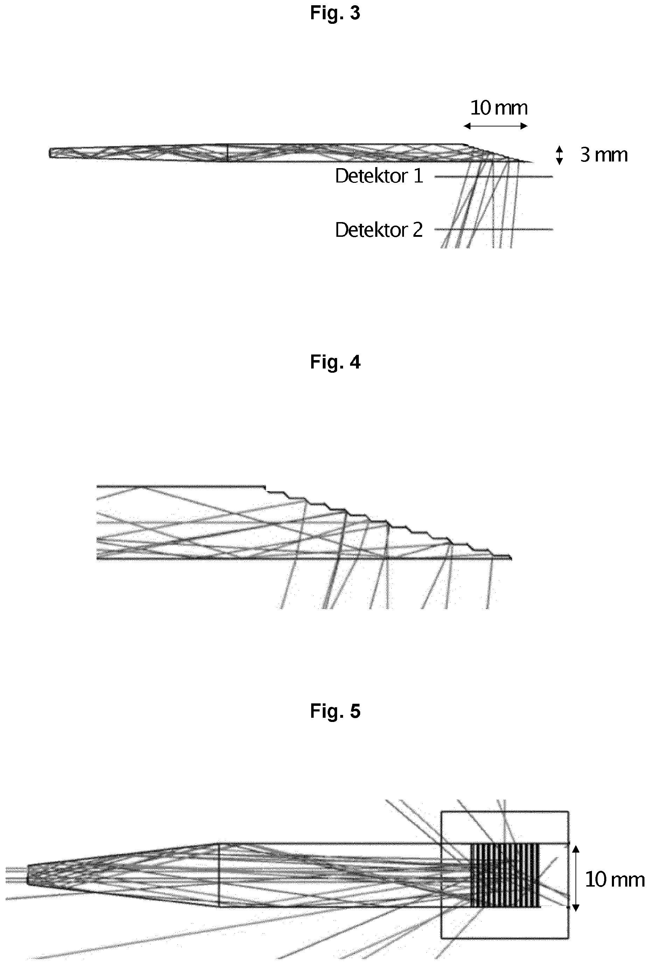

Die Fig. 3-5 zeigen eine simulative Versuchsanordnung mit Strahlengängen von in ein Lichtleitelement eingekoppeltem einer im Wesentlichen lambertsch abstrahlenden Lichtquelle und aus dem Lichtleitelement ausgekoppeltem Licht sowie zwei Detektoren, welche sich im Abstand von 1 mm und 10 mm zum Lichtaustritt befinden.

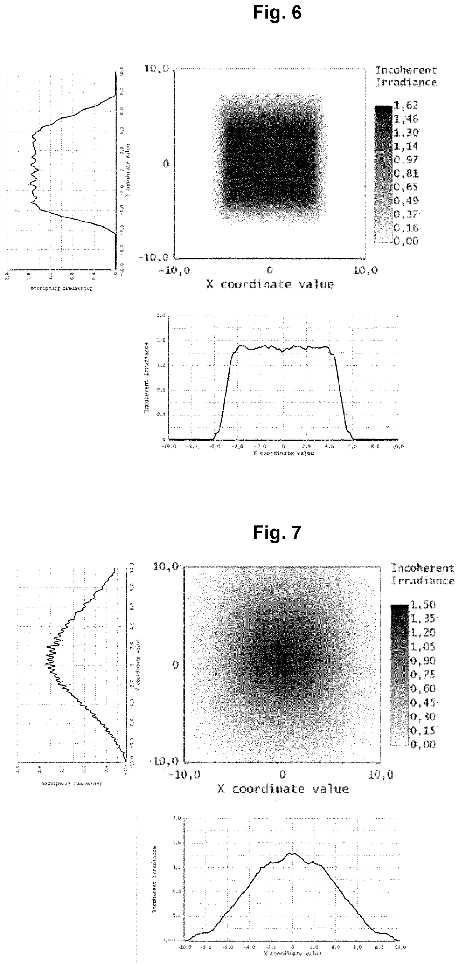

Die Fig. 6-7 zeigen die hiermit bestimmte örtliche Bestrahlungsstärke des ausgekoppelten Lichts im Abstand von 1 mm und 10 mm zum Lichtaustritt. Wie zu erkennen ist, wird mit dem beispielhaften Lichtleitelement 20 in einem Abstand von 1 mm eine über Fläche von ca. 8 mm × 8 mm eine äußerst homogene Bestrahlungsstärke mit insbesondere rechteckigem Format ermöglicht.

Im Anwendungsfall, bspw. der Aushärtung zumindest einer Schicht eines lichthärtbaren Kunststoffes oder Kunststoffkomposites, bspw. der Füllung eines Zahnes, ist in der Regel erwünscht eine gleichmäßige Aushärtung zu erzielen. Demgemäß ist die Bestrahlungsstärke bzw. die Bestrahlungszeit so auszulegen, dass auch an den Stellen geringerer Bestrahlungsstärke ein erwünschtes Ergebnis erzielt wird. Mit anderen Worten ist es erwünscht, dass jeder zu härtende Bereich mindestens mit einer definierten Energie bestrahlt wird. Dabei führen oft höhere Energiemengen, quasi eine Überbelichtung, weder zu einer Verbesserung noch zu einer Verschlechterung des Ergebnisses der Aushärtung - so lange nicht sehr hohe Energiemengen zu einer Überhitzung oder anderen Schädigungen des auszuhärtenden Materiales führen. Die Aushärtung ist also vorzugsweise hinsichtlich Zeit und/oder Energie so zu wählen, dass auch der Bereich der auszuhärtenden Fläche, der mit der geringsten Intensität bestrahlt wird, eine ausreichende Energiemenge erhält. Die minimale Strahlungsintensität I_min im Arbeitsbereich, der auszuhärtenden Fläche bzw. des Volumens, bestimmt also vorzugsweise die Aushärtezeit.

Der Arbeitsbereich ist dabei das Produkt aus der Aushärtefläche A, bspw. quadratisch mit 10 × 10 mm^2 oder bspw. kreisförmig mit Durchmesser 10 mm, und den möglichen oder zugelassenen Arbeitsabständen beim Bestrahlen einer Füllung. Dieser Abstandsbereich liegt üblicherweise bei 0 mm bis 10 mm, kann aber auch darüber liegen. Dabei soll ein direkter Kontakt mit dem Füllmaterial jedoch vorzugsweise vermieden werden, um ein Anhaften des auszuhärtenden Materials, bspw. einer Füllung, am Lichtleitelement zu verhindern.

Die Effizienz h eines Lichtleitelementes für einen bestimmten Arbeitsabstand ist dann definiert als:

$$h = (I\_min * A / E), \ mit$$

I_min: Minimale Strahlungsintensität auf der Aushärtefläche im relevanten Wellenlängenbereich,
A: Aushärtefläche,
E: in das Lichtleitelement eingestrahlte Leistung im relevanten Wellenlängenbereich.

Im Idealfall, wenn 100% der eingestrahlten Leistung vollständig homogen und ausschließlich in die Aushärtefläche abgestrahlt wird, liegt diese Effizienz h bei 1.

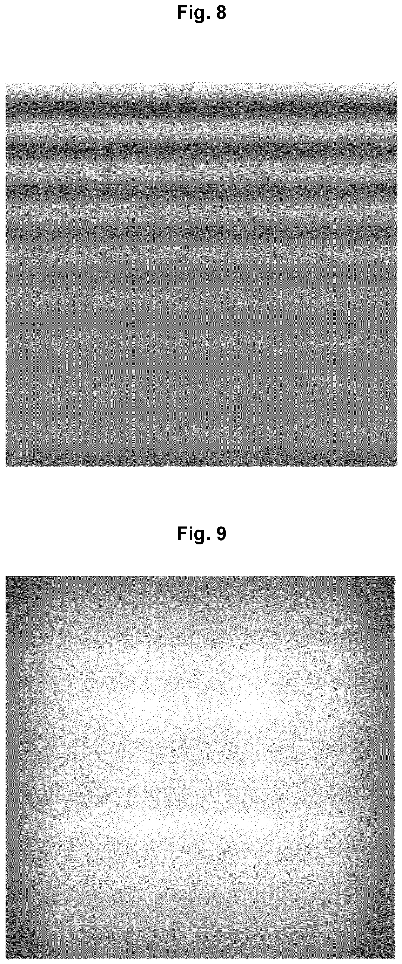

Je nach Arbeitsabstand können, aufgrund der Ausgestaltung des Grundkörpers, der Lichteinkopplung bzw. Lichtquelle und der distalen Stirnseite bzw. der Stirn- und Zwischenflächen unterschiedliche Phänomene und deren Kombination diese Effizienz beeinflussen: Insbesondere kann sich bei geringem Abstand die Struktur der distalen Stirnfläche auf dem Aushärtebereich abbilden und insbesondere die Zwischenbereiche den Bereich minimaler Strahlungsintensität bestimmen. Dies ist in Fig. 8 als Streifenmuster zu erkennen. In größerem Arbeitsabstand tritt dagegen die Divergenz der am distalen Ende abgegebenen Strahlung in den Vordergrund, so dass häufig in den Randbereichen und/oder Ecken Bereiche minimaler Intensität liegen. Dies ist in Fig. 9 als Vignettenmuster zu erkennen. In den Fig. 8 und 9 ist die Bestrahlungsstärke nach einer Glättung mittels einer Gaußkurve dargestellt, wobei die Gaußkurve bei einem Durchmesser von 1mm einen Abfall auf $1/e^2$ aufweist. Durch die Glättung mittels der Gaußkurve wird eine Lichtstreuung in einem zu härtenden transluzenten Material berücksichtigt.

Fig. 8 zeigt bei einem Grundkörper mit 10 Stirnseiten, proximal beleuchtet bei lambertscher Abstrahlung die Limitierung der minimalen Intensität am distalen Ende aufgrund der Zwischenbereiche im Abstand von 0 mm zur Arbeitsfläche. Fig. 9 zeigt die Limitierung aufgrund der Divergenz des Lichtes in 10 mm Abstand zur Arbeitsfläche. Der Zielbereich hat in diesen Beispielen insbesondere eine Fläche von 10mm². Ferner kann eine Beleuchtung mit zwei LEDs mit lambertscher Abstrahlung vorgesehen sein, wobei z.B. ein Beleuchtungsabstand im Bereich von 1 bis 4 mm vorgesehen sein kann. Die Dicke d1 des Grundkörpers beträgt insbesondere 5mm.

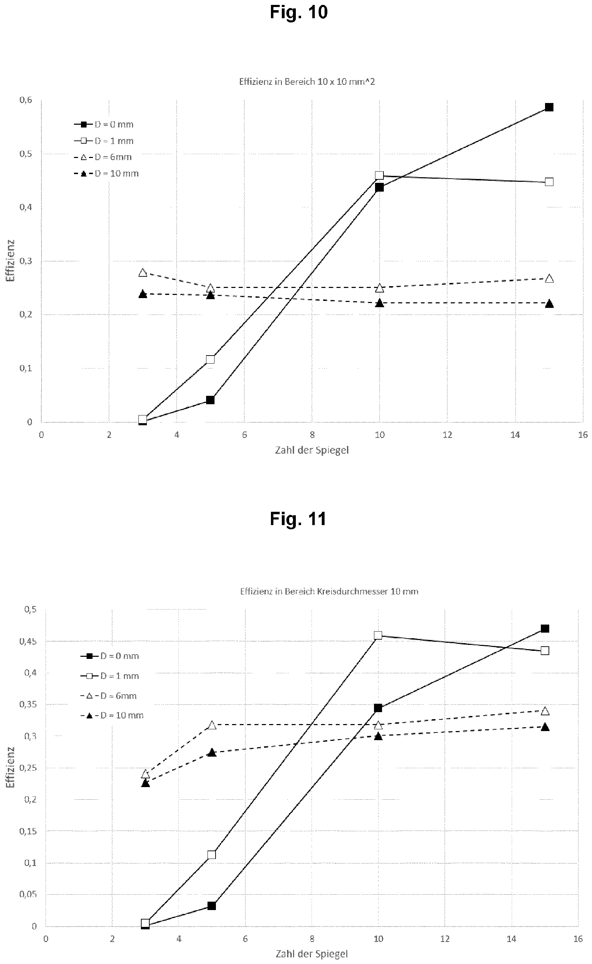

Fig. 10 und 11 zeigen die Effizienz h = (I_min * A / E) aufgetragen gegenüber der Anzahl der Stirnflächen für eine Schar von Arbeitsabständen bei quadratischer Aushärtefläche (Fig. 10) bzw. in einem Kreisdurchmesser (Fig. 11). Beispielhaft können somit erfindungsgemäße Lichtleitkörper bereitgestellt werden, die, insbesondere beleuchtet mit zwei Lichtquellen mit lambertscher Abstrahlung im Beleuchtungsabstand von z.B. im Bereich 1 bis 4 mm eine Effizienz h von >0,05, bevorzugt > 0,25, meist bevorzugt > 0,30, jedenfalls < 1,00, aufweisen. So ergibt sich für ein Lichtleitelement mit einem rechteckigen Grundkörper einer Höhe von 3mm mit 10 Stirnflächen im Arbeitsabstand 0 mm eine Effizienz von ca. 0,33 auf einer 10×10mm² Fläche bzw. 0,25 auf einem Kreis mit 10mm Durchmesser. In 10mm Abstand ergeben sich korrespondierend Werte von ca. 0,2 bzw. 0,3. Hat der Grundkörper eine Dicke d1 von 5 mm und weist 10 Stirnflächen auf, liegen die korrespondierenden Werte bei 0 mm Abstand bei ca. 0,44 bzgl. der 10×10mm² Fläche bzw. 0,34 bzgl. eines Kreises mit 10 mm Durchmesser, sowie in 10 mm Abstand bei ca. 0,22 bzw. 0,3. Bezogen auf die Effizienz auf einer Fläche von 10×10mm² können mit letzterem Grundkörper mit einer höheren Anzahl bspw. 15 Stirnflächen eine Effizienz von ca. 0,58 in 0 mm Abstand und 0,22 in 10 mm Abstand erreicht werden. Bei einer Anzahl von Stirnflächen von 5 liegen die korrespondierenden Werte bei ca. 0,05 bzw. 0,24.

Insbesondere aufgrund dieser Erkenntnisse kann es besonders bevorzugt sein, dass eine Anzahl von Stirnflächen, ggf. pro Längsausdehnung, vorgesehen ist, welche in den weiter oben bezeichneten Bereichen liegt. Beispielsweise kann auch eine Anzahl von Stirnflächen, insbesondere abwechselnd angeordnet mit Zwischenflächen, vorgesehen sein, welche im Bereich von 4 bis 18 liegt oder im Bereich von 5 bis 16 liegt.

Allgemein kann vorgesehen sein, dass die Mehrzahl von Stirnflächen jeweils gleich ausgerichtet sind (denselben Normalenvektor haben) und/oder gleich groß sind und/oder gleichmäßig über die Längsausdehnung verteilt sind. Bei 10 Stirnflächen und einer Dicke d1 von 3 mm kann also bspw. jede Stirnfläche 0,3 mm dick sein. Ferner kann z.B. auch jede Stirnfläche 0,3 mm lang sein (Erstreckung entlang der Längsausdehnung). In diesem Beispiel sind dann insbesondere 9 Zwischenflächen vorgesehen, welche sich z.B. jeweils über eine Länge von (10 mm - 3 mm) / 9 = 0,78 mm erstrecken.

Mit der Erfindung kann somit neben einem sehr flach aufbauenden Lichtleitelement, welches sich insbesondere zur Lichtaushärtung an schwer zugänglichen Bereichen eignet, eine optimierte Effizienz ermöglicht werden und eine gute Anpassung der Abstrahlcharakteristik an die Form des auszuhärtenden Bereichs, bspw. eines Zahnes gewährleistet werden.

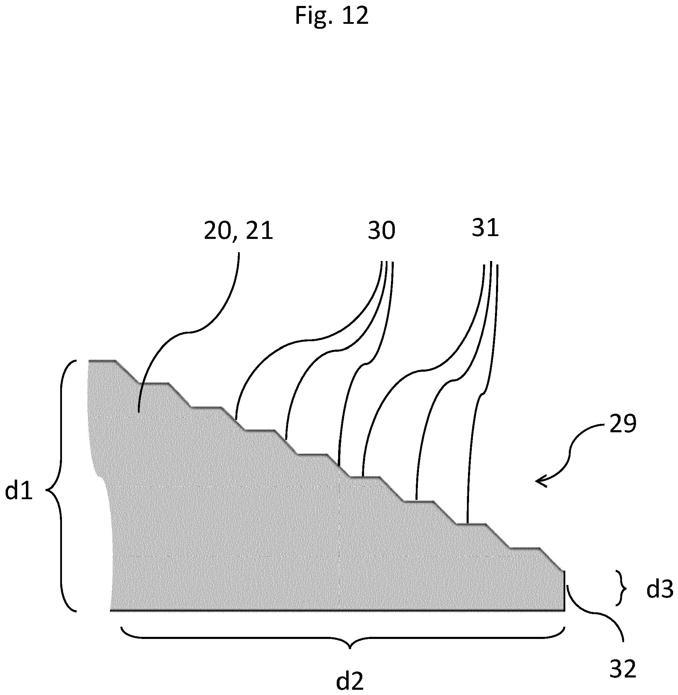

Fig. 12 zeigt eine Ausführungsform eines monolithischen Lichtleitelements 20 welches eine Abschlusskante 32 aufweist. Die Abschlusskante verläuft in diesem Fall im Wesentlichen senkrecht zu der Längsausdehnung des Lichtleitelement, könnte aber auch in einem Winkelbereich von bspw. +-25° dazu verlaufen oder auch gerundet ausgebildet sein. Die Abschlusskante 32 verläuft jedenfalls steiler als die Stirnflächen 30, so dass am distalen Ende des Lichtleitkörpers der Winkel am Übergang zum Lichtaustritt stumpfer wird. Hierdurch kann ein spitzer Abschluss und eine Verletzungsgefahr, insbesondere bei medizinischen Anwendungen, vermieden werden.

**Patentansprüche**

1. Vorrichtung zur Lichtapplikation (1), insbesondere zur Lichthärtung flüssiger Materialien, z.B. von Zahnfüllungen innerhalb der Mundhöhle, wobei die Vorrichtung umfasst:

   ein Handstück (10) mit einem Gehäuse und einer innerhalb des Gehäuses angeordneten Lichtquelle (11) zur Emission von Licht, und
   ein an dem Handstück (10), insbesondere lösbar, befestigbares Lichtleitelement (20) mit einem aus einem Festkörper bestehenden Lichtleitkörper (21), einem Lichteintritt (27) zur Einkopplung von Licht in den Lichtleitkörper (21) und einem Lichtaustritt (26) zur Auskopplung von Licht aus dem Lichtleitkörper (21),
   wobei das Lichtleitelement (20) eine Längsausdehnung aufweist und eine erste optische Achse (A1) für in den Lichtleitkörper (21) eingekoppeltes Licht definiert, wobei diese erste optische Achse (A1) entlang der Längsausdehnung des Lichtleitelements (20) verläuft, und wobei der Lichtaustritt (26) eine zweite optische Achse (A2) für aus dem Lichtleitkörper (21) ausgekoppeltes Licht definiert, wobei die zweite optische Achse (A2) quer zu der ersten optischen Achse (A1) verläuft, und
   wobei das Lichtleitelement (20) an einem distalen Ende seiner Längsausdehnung eine distale Stirnseite (29) aufweist an welcher das in den Lichtleitkörper (21) eingekoppelte Licht zur Auskopplung umlenkbar ist, derart, dass der Lichtaustritt (26) durch einen Bereich der Mantelfläche des Lichtleitelements (20) gebildet ist, und
   wobei die distale Stirnseite (29) eine Mehrzahl von Stirnflächen (30) zur Umlenkung des Lichts aufweist, welche jeweils quer zur ersten optischen Achse (A1) und quer zur zweiten optischen Achse (A2) verlaufen und welche über Zwischenflächen (31) miteinander verbunden sind.

2. Vorrichtung zur Lichtapplikation (1) gemäß dem vorstehenden Anspruch,

   wobei die durch die Zwischenflächen (31) miteinander verbundenen Stirnflächen (30) entlang der Längsausdehnung des Lichtleitelements (20) versetzt angeordnet sind, und/oder
   wobei die Abmessung (d2) des Lichtaustritts (26) entlang der Längsausdehnung des Lichtleitelements (20) in einem Bereich von 2mm bis 20mm liegt, vorzugsweise in einem Bereich von 5mm bis 15mm liegt, besonders bevorzugt in einem Bereich von 3mm bis 8mm liegt, und/oder
   wobei die Dicke (d1) des Lichtleitelements (20) senkrecht zum Lichtaustritt (26) in einem Bereich von 1mm bis 15mm liegt, vorzugsweise in einem Bereich von 2mm bis 10mm liegt, besonders bevorzugt in einem Bereich von 3mm bis 8mm liegt, und/oder
   wobei die Abmessung (d2) des Lichtaustritts (26) entlang der Längsausdehnung des Lichtleitelements (20) um einen Faktor von mindestens 1,5, vorzugsweise um einen Faktor von mindestens 2, besonders bevorzugt um einen Faktor von mindestens 3, größer ist als die Dicke (d1) des Lichtleitelements (20) senkrecht zum Lichtaustritt (26).

3. Vorrichtung zur Lichtapplikation (1) gemäß einem der vorstehenden Ansprüche,

   wobei die distale Stirnseite (29) am äußersten Ende eine Abschlussfläche (32) aufweist,
   wobei die Abschlussfläche (32) vorzugweise einen stumpfen Abschluss des Lichtleitelements am äußersten Ende der distalen Stirnseite (29) bildet,
   wobei die Abschlussfläche (32) beispielsweise flach oder gerundet ausgebildet ist und derart verläuft, dass am äußersten Ende der distalen Stirnseite (29) spitze Winkel vermieden werden, insbesondere Winkel unter 75 Grad vermieden werden,
   wobei die Abschlussfläche (32) vorzugweise derart verläuft, dass ein Normalenvektor auf der Abschlussfläche (32) mit der ersten optischen Achse (A1) einen größeren Winkel bildet als ein Winkel zwischen dem Normalenvektor (N) einer Stirnfläche (30) und der ersten optischen Achse (A1),
   wobei die Abschlussfläche (32) vorzugweise einen Dickenanteil (d3) der Dicke (d1) des Lichtleitelements aufweist, welcher im Bereich von 3% bis 30% liegt.

4. Vorrichtung zur Lichtapplikation (1) gemäß einem der vorstehenden Ansprüche,

wobei die oder einige der Stirnflächen (30) der Stirnseite (29) planar ausgebildet sind und/oder wobei die oder einige der Stirnflächen (30) dieselbe Orientierung aufweisen und/oder wobei die oder einige der Zwischenflächen (31) planar ausgebildet sind und/oder wobei die oder einige der Zwischenflächen (31) dieselbe Orientierung aufweisen.

5.  Vorrichtung zur Lichtapplikation (1) gemäß einem der vorstehenden Ansprüche,

    wobei die Stirnflächen (30) der distalen Stirnseite (29) derart verlaufen, dass ein Normalenvektor (N) auf der Stirnfläche mit der ersten und/oder zweiten optischen Achse (A1, A2) einen Winkel (a1, a2) bildet, welcher zwischen 157,5 und 112,5 Grad, vorzugsweise zwischen 145 und 125 Grad liegt, besonders bevorzugt zwischen 140 und 130 Grad liegt, nochmals bevorzugter zwischen 137,5 und 132,5 Grad liegt, und/oder wobei die zweite optische Achse (A2) zu der ersten optischen Achse (A1) in einem Winkel verläuft, welcher zwischen 45 und 135 Grad liegt, vorzugsweise zwischen 70 und 110 Grad liegt, besonders bevorzugt zwischen 80 und 100 Grad liegt, nochmals bevorzugter zwischen 85 und 95 Grad liegt und/oder wobei die Zwischenflächen (31) der distalen Stirnseite (29) derart verlaufen, dass ein Normalenvektor auf der Zwischenfläche mit der ersten optischen Achse (A1) einen kleineren Winkel bildet als ein Winkel zwischen dem Normalenvektor (N) einer Stirnfläche (30) und der ersten optischen Achse (A1), und/oder wobei die Zwischenflächen (31) der distalen Stirnseite (29) derart verlaufen, dass ein Normalenvektor auf der Zwischenfläche mit der ersten optischen Achse (A1) einen Winkel bildet, welcher zwischen 70 und 110 Grad liegt, besonders bevorzugt zwischen 80 und 100 Grad liegt, nochmals bevorzugter zwischen 85 und 95 Grad liegt.

6.  Vorrichtung zur Lichtapplikation (1) gemäß einem der vorstehenden Ansprüche,

    wobei die distale Stirnseite (29) eine Anzahl von Stirnflächen aufweist, welche im Bereich von 5 bis 20 liegt, vorzugsweise im Bereich von 6 bis 15 liegt, besonders bevorzugt im Bereich von 7 bis 11 liegt, und/oder wobei die distale Stirnseite (29) eine Anzahl von Stirnflächen pro Millimeter entlang der Längsausdehnung aufweist, welche im Bereich von 0,5 bis 2 liegt, vorzugsweise im Bereich von 0,6 bis 1,5 liegt, besonders bevorzugt im Bereich von 0,7 bis 1,1 liegt.

7.  Vorrichtung zur Lichtapplikation (1) gemäß einem der vorstehenden Ansprüche,

    wobei das Lichtleitelement (20) einen insbesondere auf der distalen Stirnseite (29) und/oder deren Stirnflächen (30) aufgebrachten Reflektor (23) zur Auskopplung von Licht aus dem Lichtleitkörper (21) umfasst und wobei der Reflektor (23) vorzugsweise als Spiegel oder Interferenzspiegel mit einer oder mehreren Schichten ausgebildet ist, welche bevorzugt aufgedampft und/oder aufgesputtert ist und wobei vorzugsweise der Reflektor (23) für Licht mit einer Wellenlänge zwischen 380 und 500 Nanometer eine Reflektivität von über 90 Prozent, vorzugsweise von über 95 Prozent, besonders bevorzugt von über 99 Prozent aufweist.

8.  Vorrichtung zur Lichtapplikation (1) gemäß einem der vorstehenden Ansprüche,

    wobei der aus einem Festkörper bestehende Lichtleitkörper (21) aus einem homogenen Material besteht und/oder wobei der aus einem Festkörper bestehende Lichtleitkörper (21) aus einem isotropen Material besteht und/oder wobei der aus einem Festkörper bestehende Lichtleitkörper (21) monolithisch ausgebildet ist und/oder wobei der Lichtleitkörper (21) aus Glas ist, insbesondere als Glaspressteil hergestellt ist, wobei bevorzugt Borosilikatglas und/oder optisches Kronglas umfasst ist und/oder wobei der Lichtleitkörper (21) aus Kunststoff ist, insbesondere als Kunststoffspritzgussteil hergestellt ist, wobei bevorzugt Polycarbonat (PC), Polymethylmethaacrylat (PMMA) und/oder Cycloolefin-Copolymere (COC) umfasst ist und/oder wobei der Lichtleitkörper (21), insbesondere die distale Stirnseite (29), insbesondere deren Stirnflächen (30) und Zwischenflächen (31), mittels Laserschneiden hergestellt ist, bevorzugt mittels Laserscheiden aus Glas geschnitten ist und besonders bevorzugt danach poliert ist.

9.  Vorrichtung zur Lichtapplikation (1) gemäß einem der vorstehenden Ansprüche,

    wobei das Lichtleitelement (20) einen den Lichtleitkörper (21) und/oder den Reflektor (23) teilweise oder vollständig umschließenden Mantel umfasst, wobei der Mantel einen Brechungsindex aufweist, welcher geringer ist als ein oder der Brechungsindex des Lichtleitkörpers (21) und wobei der Mantel vorzugsweise als SiO2-Sputterschicht, als Kunststoffschicht oder als Flüssig-Silikon-Beschichtung (Liquid Silicone Rubber) ausgebildet ist,

und wobei die Differenz zwischen dem Brechungsindex des Lichtleitkörpers (21) und dem Brechungsindex des Mantels vorzugsweise kleiner gleich 0,16, vorzugsweise kleiner gleich 0,08 ist

und wobei die Dicke des Mantels vorzugsweise kleiner gleich 100 $\mu$m, vorzugsweise kleiner gleich 10 $\mu$m, vorzugsweise kleiner gleich 5 $\mu$m ist.

10. Vorrichtung zur Lichtapplikation (1) gemäß einem der vorstehenden Ansprüche,

wobei das Lichtleitelement (20) in Form eines Stabs mit einer entlang der Längsausdehnung verlaufenden Stabachse ausgebildet ist, welche insbesondere im Wesentlichen geradlinig verläuft und/oder

wobei die zweite optische Achse quer zu der Längsausdehnung des Lichtleitelements und/oder der Stabachse im distalen Bereich verläuft und/oder

wobei das Lichtleitelement (20) an einem proximalen Ende der Längsausdehnung eine insbesondere den Lichteintritt (27) bildende proximale Stirnfläche aufweist und/oder

wobei die Längsausdehnung des Lichtleitelements (20) und/oder des Lichtleitkörpers (21) zwischen 1 und 30 Zentimetern liegt, bevorzugt zwischen 5 und 15 Zentimetern liegt, besonders bevorzugt zwischen 8 und 12 Zentimetern liegt und/oder

wobei das Lichtleitelement (20) und/oder der Lichtleitkörper (21) entlang der Längsausdehnung einen Querschnitt aufweist, dessen Fläche zwischen 0,1 und 3 Quadratzentimetern, bevorzugt zwischen 0,3 und 2 Quadratzentimetern liegt, besonders bevorzugt zwischen 0,5 und 1,5 Quadratzentimetern liegt.

11. Vorrichtung zur Lichtapplikation (1) gemäß einem der vorstehenden Ansprüche,

wobei das Lichtleitelement (20) entlang der Längsausdehnung, insbesondere entlang der Stabachse einen veränderlichen Querschnitt aufweist,

wobei der Querschnitt des Lichtleitelements (20) am proximalen Ende beispielsweise eckig, insbesondere rechteckig oder quadratisch, ausgebildet ist oder rund, insbesondere kreisförmig ausgebildet ist und/oder am distalen Ende beispielsweise eckig, insbesondere rechteckig ausgebildet ist und/oder

wobei zwischen dem proximalen und dem distalen Ende ein Formübergangsbereich vorgesehen ist und/oder wobei der Querschnitt des Lichtleitelements (20) am proximalen Ende konisch ausgebildet ist, um die Einkopplung von divergentem Licht zu begünstigen.

12. Lichtleitelement (20), insbesondere für eine Vorrichtung zur Lichtapplikation (1) gemäß einem der vorstehenden Ansprüche,

wobei das Lichtleitelement (20) eine Längsausdehnung aufweist und eine erste optische Achse (A1) für in den Lichtleitkörper (21) eingekoppeltes Licht definiert, wobei diese erste optische Achse (A1) entlang der Längsausdehnung des Lichtleitelements (20) verläuft, und wobei der Lichtaustritt (26) eine zweite optische Achse (A2) für aus dem Lichtleitkörper (21) ausgekoppeltes Licht definiert, wobei die zweite optische Achse (A2) quer zu der ersten optischen Achse (A1) verläuft, und

wobei das Lichtleitelement (20) an einem distalen Ende seiner Längsausdehnung eine distale Stirnseite (29) aufweist an welcher das in den Lichtleitkörper (21) eingekoppelte Licht zur Auskopplung umlenkbar ist, derart, dass der Lichtaustritt (26) durch einen Bereich der Mantelfläche des Lichtleitelements (20) gebildet ist, und

wobei die distale Stirnseite (29) eine Mehrzahl von Stirnflächen (30) zur Umlenkung des Lichts aufweist, welche jeweils quer zur ersten optischen Achse (A1) und quer zur zweiten optischen Achse (A2) verlaufen und welche über Zwischenflächen (31) miteinander verbunden sind.

13. Verwendung eines Lichtleitelements (20), insbesondere gemäß dem vorstehenden Anspruch, zur Aushärtung flüssiger Materialien, insbesondere zur industriellen Kleberaushärtung.

14. Verfahren zur Herstellung eines Lichtleitelements (20) umfassend:

Bereitstellen eines Grundkörpers mit einer Längsausdehnung, insbesondere aus Glas, z. B. als Glaspressteil, oder aus Kunststoff, z.B. als Kunststoffspritzgussteil, und
Bearbeiten des distalen Endes des Grundkörpers, derart, dass eine distale Stirnseite(29) mit einer Mehrzahl von Stirnflächen (30) gebildet wird, welche über Zwischenflächen (31) miteinander verbunden sind,
wobei das Bearbeiten des distalen Endes des Grundkörpers bevorzugt mittels eines Laserprozesses, eines Umformungs- oder Verformungsprozesses, eines Ätzprozesses und/oder eines abrasiven Prozesses erfolgt.

15. Verfahren gemäß dem vorstehenden Anspruch,

wobei das Bearbeiten des distalen Endes des Grundkörpers mittels Laserschneiden, insbesondere mittels eines Linienfokus, erfolgt, wobei am distalen Ende des Grundkörpers entlang einer schräg zu der Längsausdehnung des Grundkörpers verlaufenden ersten Richtung eine erste Schnittfläche gebildet wird, um eine distale Stirnfläche (30) zu bilden und wobei danach entlang einer paralleler zu der Längsausdehnung des Grundkörpers als die erste Richtung verlaufenden zweiten Richtung, eine zweite Schnittfläche gebildet wird, um eine Zwischenfläche (31) zu bilden und wobei danach vorzugsweise entlang der ersten Richtung eine dritte Schnittfläche gebildet wird, um eine weitere distale Stirnfläche (30) zu bilden.

# Fig. 1

**Fig. 2**

## Fig. 3

10 mm

3 mm

Detektor 1

Detektor 2

## Fig. 4

## Fig. 5

10 mm

## Fig. 6

## Fig. 7

## Fig. 8

## Fig. 9

EP 4 327 774 A1

# Fig. 10

Effizienz in Bereich 10 x 10 mm^2

# Fig. 11

Effizienz in Bereich Kreisdurchmesser 10 mm

Fig. 12

Europäisches Patentamt
European Patent Office
Office européen des brevets

# EUROPÄISCHER RECHERCHENBERICHT

**Nummer der Anmeldung**

**EP 23 19 1434**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2018 119423 A1 (SCHOTT AG [DE]) 13. Februar 2020 (2020-02-13) | 13 | INV. A61C13/15 |
| A | * Absatz [0001] – Absatz [0063]; Abbildungen 1-3 * | 1-12,14, 15 | B29C35/00 G02B6/00 |
| | ----- | | |
| X | DE 10 2020 126944 A1 (HELLA GMBH & CO KGAA [DE]) 3. März 2022 (2022-03-03) | 14,15 | |
| A | * Absatz [0007] – Absatz [0010]; Abbildungen 1-4 * | 1-13 | |
| | ----- | | |
| X | DE 699 11 403 T2 (ZUMTOBEL STAFF GMBH [AT]) 24. Juni 2004 (2004-06-24) | 12 | |
| A | * Absatz [0001] – Absatz [0055]; Abbildung 5 * | 1-11, 13-15 | |
| | ----- | | |
| X | US 2008/252986 A1 (IJZERMAN WILLEM LUBERTUS [NL] ET AL) 16. Oktober 2008 (2008-10-16) | 12 | |
| A | * Absatz [0001] – Absatz [0148]; Abbildungen 1-4b * | 1-11, 13-15 | **RECHERCHIERTE SACHGEBIETE (IPC)** |
| | ----- | | |
| X | DE 10 2017 106442 A1 (AUTOMOTIVE LIGHTING REUTLINGEN GMBH [DE]) 27. September 2018 (2018-09-27) | 12 | A61C F21S |
| A | * Absatz [0001] – Absatz [0054]; Abbildungen 1-10 * | 1-11, 13-15 | G02B B29C |
| | ----- | | |

Der vorliegende Recherchenbericht wurde für alle Patentansprüche erstellt

| Recherchenort | Abschlußdatum der Recherche | Prüfer |
|---|---|---|
| München | 15. November 2023 | Wirth, Christian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 23 19 1434

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-11-2023

| Im Recherchenbericht angeführtes Patentdokument | Datum der Veröffentlichung | Mitglied(er) der Patentfamilie | Datum der Veröffentlichung |
|---|---|---|---|
| DE 102018119423 A1 | 13-02-2020 | KEINE | |
| DE 102020126944 A1 | 03-03-2022 | DE 102020126944 A1 | 03-03-2022 |
| | | WO 2022049195 A1 | 10-03-2022 |
| DE 69911403 T2 | 24-06-2004 | AT E250201 T1 | 15-10-2003 |
| | | DE 69911403 T2 | 24-06-2004 |
| | | EP 1084366 A1 | 21-03-2001 |
| | | WO 9964785 A1 | 16-12-1999 |
| US 2008252986 A1 | 16-10-2008 | CN 101310143 A | 19-11-2008 |
| | | EP 1952056 A1 | 06-08-2008 |
| | | JP 5178523 B2 | 10-04-2013 |
| | | JP 2009516208 A | 16-04-2009 |
| | | KR 20080077190 A | 21-08-2008 |
| | | TW 200734581 A | 16-09-2007 |
| | | US 2008252986 A1 | 16-10-2008 |
| | | WO 2007054848 A1 | 18-05-2007 |
| DE 102017106442 A1 | 27-09-2018 | KEINE | |

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- US 5147204 A
- EP 2339382 A1
- US 20080254405 A1
- US 20060040231 A1
- US 6749427 B1
- FR 2334785 A1
- DE 2603513 A1

**In der Beschreibung aufgeführte Nicht-Patentliteratur**

- Photodynamic Therapy of Cancer. *Cancer Medicine,* 2003